# FASCICULE DE BREVET EUROPEEN

(11) **EP 1 746 291 B1**
(45) Date de publication et mention de la délivrance du brevet: **19.03.2008**
(21) Numéro de dépôt: 06291064.1
(22) Date de dépôt: 27.06.2006
(51) Int. Cl.: F16B 7/18

(54) **Système de fixation d'un profile**
System zur Befestigung eines Profils
System for fixing a profile

(30) Priorité: 18.07.2005 FR 0507617
(43) Date de publication de la demande: 24.01.2007
(73) Titulaire: Société de Constructions Electriques de la Seine ( CES), 92130 Issy-les-Moulineaux (FR)
(72) Inventeur: Penichon, Mickael, CES, 72120 Saint Calais (FR)
(74) Mandataire: Burbaud, Eric

(56) Documents cités:
- DE-B3- 10 249 783
- FR-A- 2 831 472
- US-A- 5 052 565

## Description

La présente invention est relative aux systèmes de fixation de profilés.

Un système de fixation avec toutes les caractéristiques du préambule de la revendication 1 est connu du document US-A-5 052 565.

Plus particulièrement, la présente invention propose un système de fixation qui permet de fixer de manière simple et robuste un profilé avec une portion allongée et une tête élargie, comme par exemple une platine, solidaire de la portion allongée sur divers type de surfaces d'accroche comme par exemple des poutrelles de type IPN.

A cet effet, l'invention propose un système de fixation du genre en question caractérisé en ce que :
- le profilé s'étend entre une première extrémité et une seconde extrémité solidaire d'une tête élargie, et
- la bride inclut un évidement traversé par le profilé, la première face de la bride étant adaptée pour venir en butée contre la tête élargie dudit profilé.

Grâce à ces dispositions, un tel système de fixation permet de fixer des profilés en C sur des poutres, notamment des poutrelles IPN, qui sont très présentes sur les sites industriels. Par ailleurs, l'installation d'un tel système de fixation est facilité et ne requiert que peu de pièces : le profilé, la bride et les dispositifs de serrage de la bride sur la surface d'accroche. Il n'est donc plus nécessaire de prévoir des trous dans la surface d'accroche pour installer des boulonnages.

Selon une variante de l'invention, l'évidement de la bride est adapté pour autoriser une pluralité de configurations angulaires de la bride relativement au profilé autour de la direction longitudinale.

Ainsi, un tel système de fixation peut s'adapter sur une pluralité de types de poutrelles, correspondant à chaque configuration angulaire autorisée par la bride. On obtient ainsi un système de fixation « universel » qui peut être ajusté pour différents types de poutrelles.

Conformément à l'invention, l'évidement peut également être circulaire, ce qui augmente l'adaptabilité du système de fixation aux surfaces d'accroche, notamment aux poutrelles IPN.

Selon une variante de l'invention, le dispositif de serrage est adapté pour autoriser une pluralité de configurations angulaires du dispositif de serrage relativement à la bride autour de la direction longitudinale.

Un tel dispositif de serrage complète le système de fixation, car il assure un serrage efficace de la bride et du profilé sur la poutrelle sur laquelle le système de fixation est accroché quelle que soit la configuration angulaire de la bride par rapport à la poutre. Ainsi, le système de fixation est donc performant quel que soit le type de surface d'accroche sur lequel il est accroché. L'adaptabilité du système de fixation est donc encore augmentée.

Conformément à l'invention, le dispositif de serrage comprend une mâchoire qui couvre au moins partiellement la première face.

Selon une variante de l'invention, la mâchoire et la bride sont percées de trous respectifs traversés par une vis sur laquelle est vissé un écrou, la vis et l'écrou étant adaptés pour prendre appui respectivement sur la bride et la mâchoire en serrant la mâchoire vers la première face de la bride.

Un tel dispositif de serrage assure un réglage et une fixation simple du système de fixation sur une poutrelle, permettant ainsi à un utilisateur d'installer de manière rapide le système de fixation sur la poutrelle. De plus, ce type de serrage est robuste, puisque les sollicitations mécaniques sont exercées principalement sur l'écrou et vis ce qui assure une solide fixation du profilé.

Enfin, selon une variante de l'invention, le système de fixation comprend deux dispositifs de serrage situés sur la bride de part et d'autre de l'évidement. Ceci permet une symétrie de l'accroche renforçant la fixation.

D'autres caractéristiques et avantages de l'invention apparaîtront au cours de la description suivante d'un de ces modes de réalisation donné à titre d'exemple non limitatif en regard des dessins joints.

Sur les dessins :
- la figure 1 représente une vue en éclaté du système de fixation et de la poutrelle ;
- la figure 2 représente une vue de dessus du système de fixation accroché à une poutrelle ; et
- les figures 3a, 3b et 3c représentent des vues en perspective de systèmes de fixation accrochés sur trois types de poutrelles différentes.

Sur les différentes figures, les mêmes références désignent des éléments identiques ou similaires.

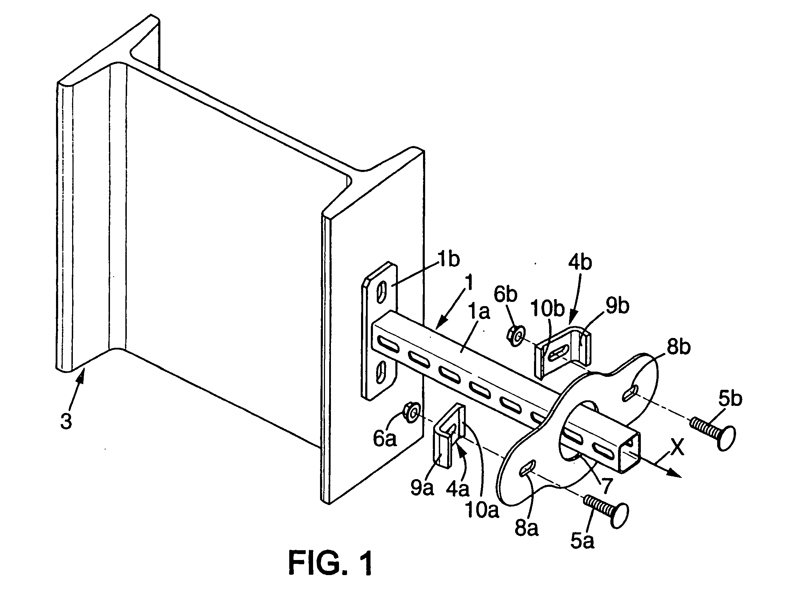

La figure 1 représente un éclaté d'un système de fixation qui comprend un profilé 1 avec une partie allongée 1a, s'étendant selon une direction longitudinale X, solidaire d'une tête élargie 1b. La tête élargie 1b du profilé est par exemple plane et normale à la direction longitudinale formant ainsi une platine. La partie allongée 1a est par exemple un C carré et peut comporter une pluralité de trous sur chacune de ses faces, permettant d'y fixer des éléments tels des chemins de câbles. Afin de fixer un tel profilé sur une poutrelle 3 par exemple de type poutrelle IPN, avec une section en H, on utilise conformément à l'invention une bride 2. Cette bride 2 comprend un évidement 7 au travers duquel peut être introduite la partie allongée 1a du profilé 1. Cet évidement peut autoriser une pluralité de positions angulaires de la bride 2 par rapport au profilé 1, et peut par exemple, être circulaire, comme dans l'exemple représenté à la figure 1.

La bride 2 peut de plus comprendre une paire de trous 8a et 8b au travers desquels sont insérés respectivement une vis 5a et 5b comprenant une tige filetée. Sur chacune de ces tiges filetées sont placées des languettes 4a et 4b, intercalées entre la bride 2 et des écrous 6a et 6b. Les languettes 4a et 4b peuvent avoir une forme courbée, ou en L. Chaque languette 4a et 4b peut comporter une première extrémité ou base 9a et 9b d'une part et une deuxième extrémité ou portion de serrage 10a et 10b d'autre part.

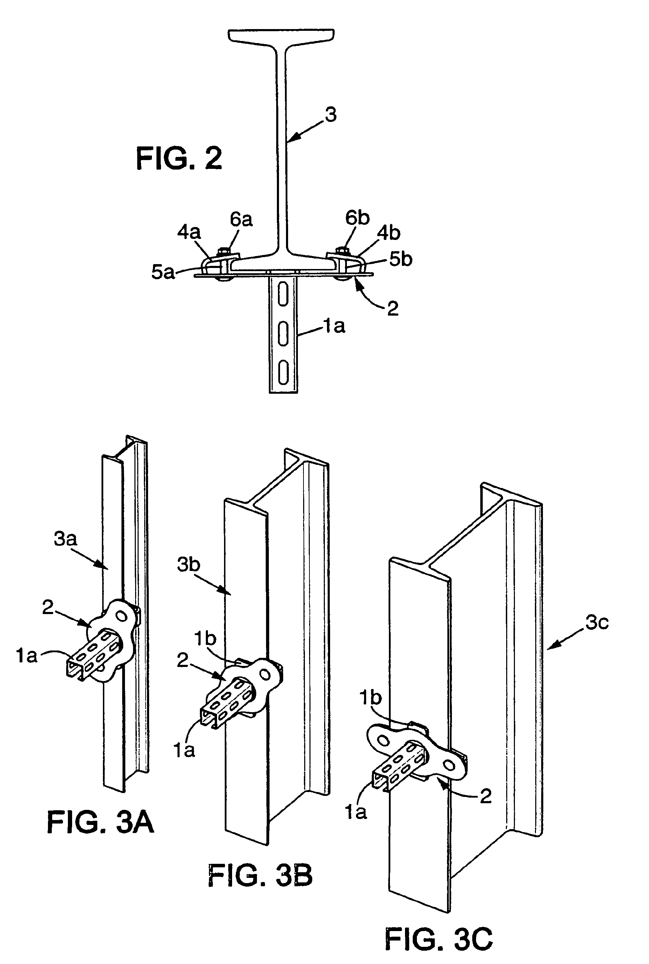

Comme mieux illustré à la figure 2, la bride 2 est maintenue sur une poutrelle IPN 3 au moyen des languettes 4a et 4b serrées par les écrous 6a et 6b respectivement. Les écrous permettent d'ajuster l'écart entre la bride 2 et les portions de serrage 10a et 10b des languettes 4a et 4b respectivement en fonction de l'épaisseur de la poutrelle 3. Ainsi, le système de fixation reste adapté même si l'épaisseur de la poutrelle varie d'une poutrelle à une autre. De plus, l'installation d'un tel système de fixation est simple puisque peu de pièces sont nécessaires pour la fixation et un opérateur seul peut accrocher ce système de fixation.

De plus, comme illustré par les figures 3A, 3B, et 3C, un système de fixation unique est adapté pour une pluralité de types de poutrelles 3a, 3b et 3c. En effet, en tournant la bride 2 par rapport à un axe défini par la position allongée 1a du profilé, on peut adapter l'écart entre les dispositifs de serrage formés par les languettes 4a et 4b à la largeur de la poutrelle 3a, 3b ou 3c. Les languettes 4a et 4b étant également libres en rotation par rapport aux tiges filetées 5a et 5b, celles-ci peuvent être orientées afin de fournir un serrage efficace quelle que soit l'inclinaison de la bride 2.

Un système de fixation conforme à l'invention, comme celui de l'exemple décrit permet donc un accrochage simple et robuste, sur tous types de poutrelles ou montants. Dans l'exemple représenté, le profilé est fixé horizontalement. Cependant, un système de fixation identique pourrait être utilisé pour fixer des pendants ou des montants verticalement.

## Revendications

1. Système de fixation comprenant:
- un profilé (1) s'étendant selon une direction longitudinale (X) , et
- une bride (2) incluant des première et seconde faces, et
- au moins un dispositif de serrage adapté pour serrer la première face de la bride (2) sur une poutrelle (3, 3a, 3b, 3c), (1) **caractérisé en ce que** :
- le profilé (1) s'étend entre une première extrémité et une seconde extrémité solidaire d'une tête élargie (1b),
- la bride (2) inclut 4 un évidement (7) traversé par le profilé, la première face de la bride (2) étant adaptée pour venir en butée contre la tête élargie dudit profilé.

2. Système de fixation selon la revendication 1, dans lequel l'évidement (7) de la bride (2) est adapté pour autoriser une pluralité de configurations angulaires de la bride relativement au profilé (1) autour de la direction longitudinale.

3. Système de fixation selon la revendication 2, dans lequel l'évidement (7) est sensiblement circulaire.

4. Système de fixation selon l'une quelconque des revendications précédentes, dans lequel le dispositif de serrage est adapté pour autoriser une pluralité de configurations angulaires du dispositif de serrage relativement à la bride (2) autour de la direction longitudinale (X).

5. Système de fixation selon l'une quelconque des revendications précédentes, dans lequel le dispositif de serrage comprend une mâchoire (4a, 4b) qui couvre au moins partiellement la première face.

6. Système de fixation selon la revendication 5, dans lequel la mâchoire (4a, 4b) et la bride sont percées de trous respectifs traversés par une vis (5a, 5b) sur laquelle est vissé un écrou (6a, 6b), la vis et l'écrou étant adaptés pour prendre appui respectivement sur la bride et la mâchoire en serrant la mâchoire vers la première face de la bride (2).

7. Système de fixation selon l'une quelconque des revendications précédentes, comprenant au moins deux dispositifs de serrage situés sur la bride (2) de part et d'autre de l'évidement (7).

8. Système de fixation selon l'une quelconque des revendications précédentes, dans lequel la tête élargie (1b) du profilé est sensiblement plane et est sensiblement normale à la direction longitudinale.

## Claims

1. Fixing system comprising:
- a profile (1) extending in a longitudinal direction (X), and
- a flange (2) including first and second faces, and
- at least one clamping device adapted to clamp the first face of the flange (2) on a girder (3, 3a, 3b, 3c),
**characterised in that**:
- the profile (1) extends between a first end and a second end integral with an enlarged head (1b),
- the flange (2) includes a cutout (7) traversed by the profile, the first face of the flange (2) being adapted to abut the enlarged head of said profile.

2. Fixing system according to claim 1, in which the cutout (7) of the flange (2) is adapted to allow a plurality of angular configurations of the flange relative to the profile (1) about the longitudinal direction.

3. Fixing system according to claim 2, in which the cutout (7) is substantially circular.

4. Fixing system according to any one of the preceding claims, in which the clamping device is adapted to allow a plurality of angular configurations of the clamping device relative to the flange (2) about the longitudinal direction (X).

5. Fixing system according to any one of the preceding claims, in which the clamping device comprises a jaw (4a, 4b) which at least partially covers the first face.

6. Fixing system according to claim 5, in which the jaw (4a, 4b) and the flange are pierced with respective holes traversed by a screw (5a, 5b), on which a nut (6a, 6b) is screwed, the screw and the nut being adapted to rest respectively on the flange and the jaw, clamping the jaw towards the first face of the flange (2).

7. Fixing system according to any one of the preceding claims, comprising at least two clamping devices arranged on the flange (2) on either side of the cutout (7).

8. Fixing system according to any one of the preceding claims, in which the enlarged head (1b) of the profile (1b) is substantially planar and is substantially normal in relation to the longitudinal direction.

## Patentansprüche

1. Befestigungssystem, aufweisend:
- ein Profilelement (1), das sich entlang einer Längsrichtung (X) erstreckt, und
- einen Flansch (2), der eine erste und eine zweite Seite beinhaltet, und
- mindestens eine Spannvorrichtung, die ausgebildet ist, um die erste Seite des Flansches (2) an einem Träger (3, 3a, 3b, 3c) festzuspannen, **dadurch gekennzeichnet, dass:**
- sich das Profilelement (1) zwischen einem ersten Ende und einem zweiten Ende erstreckt, das mit einem vergrößerten Kopfstück (1b) fest verbunden ist, und
- der Flansch (2) eine Aussparung (7) beinhaltet, durch die hindurch sich das Profilelement erstreckt, wobei die erste Seite des Flansches (2) ausgebildet ist, um gegen das vergrößerte Kopfstück des Profilelementes zur Anlage zu kommen.

2. Befestigungssystem nach Anspruch 1, bei dem die Aussparung (7) des Flansches (2) ausgebildet ist, um eine Mehrzahl von Winkelkonfigurationen des Flansches relativ zum Profilelement (1) um die Längsrichtung herum zu ermöglichen.

3. Befestigungssystem nach Anspruch 2, bei dem die Aussparung (7) im Wesentlichen kreisförmig ist.

4. Befestigungssystem nach einem der vorhergehenden Ansprüche, bei dem die Spannvorrichtung ausgebildet ist, um eine Mehrzahl von Winkelkonfigurationen der Spannvorrichtung relativ zum Flansch (2) um die Längsrichtung (X) herum zu ermöglichen.

5. Befestigungssystem nach einem der vorhergehenden Ansprüche, bei dem die Spannvorrichtung eine Klemmbacke (4a, 4b) beinhaltet, welche die erste Fläche zumindest teilweise bedeckt.

6. Befestigungssystem nach Anspruch 5, bei dem die Klemmbacke (4a, 4b) und der Flansch jeweils mit Löchern versehen sind, durch die hindurch eine Schraube (5a, 5b) gesteckt wird, auf die eine Mutter (6a, 6b) aufgeschraubt wird, wobei die Schraube und die Mutter ausgebildet sind, um gegen den Flansch bzw. die Klemmbacke zur Anlage zu kommen, wobei dabei die Klemmbacke zur ersten Seite des Flansches (2) hin festgespannt wird.

7. Befestigungssystem nach einem der vorhergehenden Ansprüche, das mindestens zwei Spannvorrichtungen aufweist, die sich zu beiden Seiten der Aussparung (7) auf dem Flansch (2) befinden.

8. Befestigungssystem nach einem der vorhergehenden Ansprüche, bei dem der vergrößerte Kopf (1b) des Profilelementes im Wesentlichen eben und im Wesentlichen senkrecht zur Längsrichtung ist.
